# EUROPÄISCHE PATENTSCHRIFT

(11) **EP 2 504 197 B1**
(45) Veröffentlichungstag und Bekanntmachung des Hinweises auf die Patenterteilung: **28.08.2013**
(21) Anmeldenummer: 10768682.6
(22) Anmeldetag: 01.10.2010
(51) Int. Cl.: B60N 2/22, F01L 1/344

(54) **VERSTELLVORRICHTUNG**
ADJUSTING DEVICE
DISPOSITIF DE RÉGLAGE

(30) Priorität: 27.11.2009 DE 102009055959
(43) Veröffentlichungstag der Anmeldung: 03.10.2012
(73) Patentinhaber: FGS Vermögensverwaltungs - Und Beteiligungsgesellschaft mbH, 69226 Nussloch (DE)
(72) Erfinder: SENFT, Gerhard Friedrich, 70184 Stuttgart (DE)
(74) Vertreter: Weiss, Peter
(86) Internationale Anmeldenummer: PCT/EP2010/005990
(87) Internationale Veröffentlichungsnummer: WO 2011/063874

(56) Entgegenhaltungen:
- DE-A1- 19 827 860
- DE-A1-102006 004 968
- DE-C1- 4 233 250

## Beschreibung

### Gebiet der Erfindung

Die Erfindung betrifft eine Verstellvorrichtung nach dem Oberbegriff des Anspruchs 1 und eine Verwendung einer solchen Verstellvorrichtung nach dem nebengeordneten Anspruch.

### Stand der Technik

Aus dem Stand der Technik sind Verstellvorrichtungen für Fahrzeugsitze bekannt, die mit einer innenliegenden Patrone arbeiten, die ein Innengewinde für eine Antriebsspindel und ein Aussendrallgewinde aufweisen, wobei das Aussendrallgewinde in Drallnuten einer die Patrone umgebenden ortsfest angeordneten Hülse eingreift. So zeigt die DE 10 2006 004 968 A1 eine entsprechende Verstellmöglichkeit, wobei an der Patrone über eine Verzahnung eine Lehne antreibbar ist, so dass die Neigung der Lehne verstellt wird. Diese Drallverzahnung bewirkt infolge der axialen Verschiebung eines Steckteils auf einer Spindel eine Drehung dieses Steckteils, welche dann über die Verzahnung auf eine Beschlagprofil der Rückenlehne übertragen wird. Grundsätzlich dient der Verstellmechanismus der oben angegebenen Offenlegungsschrift dazu, eine Übersetzung zwischen dem Spindelantrieb und der Lehne herzustellen.

### Offenbarung der Erfindung

Aufgabe der Erfindung ist es, eine Verstelleinrichtung anzugeben, mit welcher zuverlässig insbesondere eine Sitz- aber auch Lehnenverstellung von Fahrzeugsitzen ermöglicht wird.

### Lösung der Aufgabe

Die Aufgabe wird mit dem Gegenstand des Anspruchs 1 gelöst. Ein weiterer Aspekt der Erfindung betrifft eine Verwendung eines solchen Gegenstands zur Verstellung eines Sitzteils. Bevorzugt wird, dass das Sitzteil insbesondere ein Sitz, eine Lehne, ein Teil einer Lehne oder ein Teil einer Sitzfläche eines Fahrzeugsitzes ist. Die Verstellung soll in der Neigung und/oder auch in der Höhe ermöglicht werden.

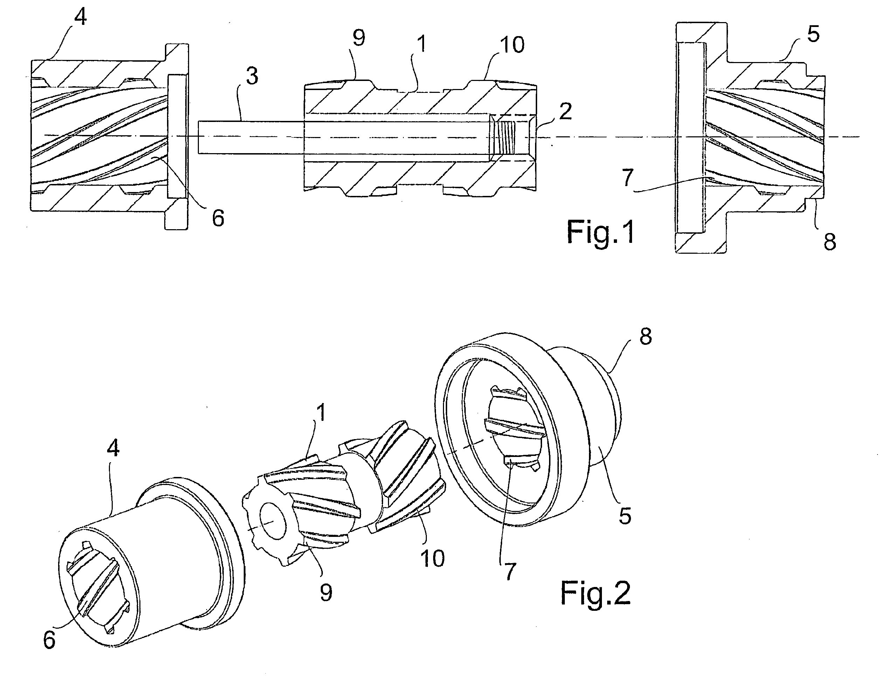

Für die Anordnung der ersten Hülse mit mindestens eine Drall-Innennut und für weitere Teile wird ausdrücklich auf die Offenlegungsschrift DE 10 2006 004 968 A1 Bezug genommen. Dieser Bezug betrifft insbesondere die axial unverschiebliche und drehfeste Lagerung der ersten Hülse der Erfindung, wobei diese Hülse der Erfindung der in der Figur 1 der in Bezug genommenen Anmeldung entspricht.

Neu an der Erfindung ist das Vorsehen einer zweiten Hülse, die vorzugsweise koaxial zu der ersten Hülse auf der Patrone angeordnet ist. Die zweite Hülse bietet dabei den Vorteil, dass das Übersetzungsverhältnis noch einmal verändert werden kann. Hierzu ist mindestens eine zweite Drall-Innennut an der zweiten Hülse vorgesehen, die mit einem zweiten Drall-Aussengewinde der Patrone in Eingriff ist. Dieses zweite Drall-Aussengewinde und die zweite Hülse sind der in Bezug genommenen Anmeldung nicht zu entnehmen.

Das zweite Drall-Aussengewinde ist gegenläufig zu dem ersten Drall-Aussengewinde angeordnet. Auf diese Weise ergibt sich die vorteilhafte Wirkung, dass die Lehnenverstellung beschleunigt werden kann. Das zweite Drall-Aussengewinde ist axial versetzt angeordnet. Dies bietet den Vorteil, dass die zweite Hülse koaxial auf der Patrone angeordnet werden kann.

Die zweite Hülse ist vorzugsweise axial unverschieblich und drehbar gelagert. Durch die axiale Unverschieblichkeit wird die zweite Hülse in eine Drehbewegung gezwungen, da sie bei einer Drehbewegung oder bei einer axialen Bewegung der Patrone nicht axial "ausweichen" kann. Die drehbare Lagerung der zweiten Hülse ist vorteilhaft, da auf diese Weise die zweite Hülse als Antriebselement für ein anzutreibendes Sitzteil verwendet werden kann. Vorteilhafterweise weist daher die zweite Hülse eine Anschlussmöglichkeit für ein Sitzteil, insbesondere für einen Sitz oder eine Lehne auf. Dies kann beispielsweise eine Verzahnung sein, wie sie in der Figur 2 der in Bezug genommenen Anmeldung gezeigt ist.

Vorteilhafterweise weist die Patrone ein Innengewinde auf. Hierzu wird wiederum auf die in Bezug genommene Anmeldung verwiesen. Das Innengewinde bietet den Vorteil, dass durch einen Spindelantrieb eine feine Einstellung der axialen Lage der Patrone möglich ist.

Vorzugsweise weist die Verstellvorrichtung einen axial festgelegten Antrieb auf, der angeordnet ist, um die Patrone axial zu verschieben. Dieser Antrieb ist vorzugsweise eine Antriebsspindel, welche in die Patrone eingreift. Dabei greift die Antriebsspindel vorzugsweise in das Innengewinde der Patrone ein. Die Antriebsspindel weist vorzugsweise einen Handrad, einen Hebel, eine Ratsche oder einen Elektromotor auf. Ein Handrad, Hebel oder Ratsche bietet den Vorteil einer weniger aufwendigen manuellen Verstellung. Ein Elektromotor bietet den Vorteil, dass eine Verstellung auch automatisch erfolgen kann.

Vorzugsweise ist die zweite Hülse mit einem zu verstellenden Teil eines Fahrzeugsitzes verbindbar. Mögliche Verbindungsmöglichkeiten sind eine Verzahnung, wie in der Bezug genommenen Anmeldung gezeigt, oder ein Antriebszapfen oder es wird eine Hebel aufgeschweisst.

Ein weiterer Aspekt der Erfindung ist ein Fahrzeugsitz mit einer erfindungsgemässen Verstellvorrichtung in einer der oben beschriebenen bevorzugten Ausführungsformen. Vorzugsweise treibt dabei die Verstellvorrichtung einen Sitz, eine Lehne oder einen Teil einer Lehne oder ein Sitzteil an, um die vorteilhaften Wirkungen der Verstellvorrichtung für den Fahrzeugsitz einzusetzen.

### Kurze Beschreibung der Zeichnungen

Nachfolgend wird ein Ausführungsbeispiel der Erfindung anhand der beiliegenden Zeichnungen erläutert, wobei die beiliegenden Zeichnungen zeigen:
- Figur 1: eine Schnittansicht durch Teile einer erfindungsgemässen Verstellvorrichtung; und
- Figur 2: eine schematische perspektivische Ansicht der Teile der Figur 1.

### Beschreibung eines bevorzugten Ausführungsbeispiels

In der Figur 1 sind schematisch in einer Schnittdarstellung verschiedene Teile einer erfindungsgemässen Verstellvorrichtung gezeigt. Der Kern der Verstellvorrichtung wird durch eine Patrone 1 gebildet, welche ein Innengewinde 2 aufweist, das mit einer Antriebsspindel 3 in Eingriff ist. Durch Drehen der axial festgelegten Antriebsspindel 3 kann die Patrone 1 in axialer Richtung, d.h., in Figur 1 nach rechts oder nach links verschoben werden. Im Betriebszustand sind auf der Patrone 1 eine erste Hülse 4 und eine zweite Hülse 5 angeordnet. Die erste Hülse 4 weist eine erste Drall-Innennut 6 auf. Es sollte hinzugefügt werden, dass, soweit in dieser Anmeldung von der DrallInnennut die Rede ist, auch mehrere Drall-Innennuten, wie in der Figur 1 gezeigt, gemeint sind. Dasselbe gilt für das später beschriebene Drall-Aussengewinde auf der Patrone 1. Die zweite Hülse 5 weist eine Drall-Innennut 7 auf.

Für die folgende Beschreibung der Erfindung wird ausdrücklich auf die DE 10 2006 004 968 A1 Bezug genommen, insbesondere auf die Figuren 1 und 2 und die dazugehörigen Figurenbeschreibungen, in welchen eine axial festgelegte Antriebsspindel, eine eingespannte Hülse und weitere Teile gezeigt sind, die bei der Erfindung entsprechend verwendet werden. So entspricht die erste Hülse 4, welche bei der Erfindung verdrehfest und axial unverschieblich gelagert ist, der in der o.g. in Bezug genommenen Anmeldung gezeigten Hülse.

Die zweite Hülse 5 weist ein zweites Drall-Innengewinde 7 auf und ist axial unverschieblich, jedoch verdrehbar angeordnet. Die zweite Hülse 5 dient dazu, als Antriebselement für eine Rückenlehne zu dienen. Hierzu weist die zweite Hülse 5 einen Verzahnungsring 8 auf, der in der Figur 1 lediglich schematisch dargestellt ist. Dieser Verzahnungsring entspricht der Verzahnung in der o.g. in Bezug genommenen Anmeldung. Im Unterschied zu der in Bezug genommenen Anmeldung ist jedoch bei der Erfindung nicht die Patrone das Abtriebselement, sondern die zweite Hülse 5, die lediglich axial unverschieblich aber verdrehbar gelagert ist.

In der Figur 2 sind die Teile aus der Figur 1 jeweils nur einmal dargestellt, wobei für gleiche Teile gleiche Bezugszeichen verwendet werden und nicht noch einmal ausführlich erläutert werden. In der Figur 2 sind ein erstes Drall-Aussengewinde 9 und ein zweites Drall-Aussengewinde 10 an der Patrone 1 gezeigt. Das erste Drall-Aussengewinde 9 ist dazu vorgesehen, mit der ersten Drall-Innennut 6 der ersten Hülse 4 in Eingriff zu stehen, wobei das zweite Drall-Aussengewinde 10 dazu vorgesehen ist, mit der Innennut 7 der zweiten Hülse 5 in Eingriff zu stehen.

Im Betrieb wird durch Drehen an der Spindel 3 die Patrone 1, welche schwimmend in den Hülsen 4 und 5 gelagert ist, axial verschoben, da die Spindel 3 axial festgelegt ist. Durch diese Axialverschiebung der Patrone 1 wird unter Berücksichtigung der Tatsache, dass die erste Hülse 4 axial unverschieblich und verdrehfest gelagert ist, die Patrone 1 ausserdem in eine Drehbewegung versetzt. Durch Einwirken sowohl der Axialverschiebung der Patrone 1 als auch der Drehbewegung der Patrone 1 auf die axial unverschieblich angeordnete, jedoch verdrehbar gelagerte Hülse 5 wird die Hülse 5 in eine Verdrehung versetzt, welche die doppelte Drehwinkelgeschwindigkeit, wie die Verdrehung der Patrone 1 aufweist. Dabei ist zu berücksichtigen, dass das ersten Drall-Aussengewinde 9 und das zweite Drall-Aussengewinde 10 gegenläufig, jedoch mit gleicher Steigung auf der Patrone 1 angeordnet sind.

Die gleiche Steigung ist bei typischen Ausführungsformen der Erfindung vorgesehen für die Drall-Aussengewinde 9 und 10. Es ist jedoch auch möglich, unterschiedliche Steigungen vorzusehen, um andere Übersetzungsverhältnisse zu erreichen. Dabei können auch zwei unterschiedliche, jedoch gleichgerichtete Steigungen vorgesehen sein, falls besonders grosse Übersetzungen erwünscht sind.

Eine weitere Möglichkeit ist, die Erfindung für einen beidseitigen Lehnenantrieb einzusetzen, wie dieser in der Figur 3 und in der Figur 4 der in Bezug genommenen Anmeldung gezeigt ist, wobei in diesem Fall die Antriebsspindel durchgängig ausgebildet ist und auf beiden Seiten eine erfindungsgemässe Verstellvorrichtung in einer der oben beschriebenen bevorzugten Ausführungsformen verwendet wird.

## Patentansprüche

1. Verstellvorrichtung, für ein Sitzteil eines Fahrzeugsitzes, mit
- einer axial unverschieblich und drehfest gelagerten ersten Hülse (4), die mindestens eine erste Drall-Innennut (6) aufweist,
- einer Patrone (1), die ein erstes Drall-Aussengewinde (9) aufweist, das mit der ersten Drall-Innennut (6) in Eingriff ist,
**gekennzeichnet durch**
eine zweite Hülse (5), die mindestens eine zweite Drall-Innennut (7) aufweist, die mit einem zweiten Drall-Aussengewinde (10) der Patrone (1) in Eingriff ist wobei das erste Drall-Aussengewinde (9) und das zweite Drall-Aussengewinde (10) axial versetzt und gegenläufig auf der Patrone (1) ausgebildet sind.

2. Verstellvorrichtung nach Anspruch 1, **dadurch gekennzeichnet, dass** die erste Hülse (4) und die zweite Hülse (5) koaxial auf der Patrone (1) angeordnet sind.

3. Verstellvorrichtung nach einem der vorhergehenden Ansprüche, **dadurch gekennzeichnet, dass** die zweite Hülse (5) axial unverschieblich und drehbar gelagert ist.

4. Verstellvorrichtung nach einem der vorhergehenden Ansprüche, **dadurch gekennzeichnet, dass** die Patrone (1) ein Innengewinde (2) aufweist.

5. Verstellvorrichtung nach einem der vorhergehenden Ansprüche, **gekennzeichnet durch** einen axial festgelegten Antrieb, der angeordnet ist, um die Patrone (1) axial zu verschieben.

6. Verstellvorrichtung nach einem der vorhergehenden Ansprüche, **dadurch gekennzeichnet, dass** der Antrieb eine Antriebsspindel (3) umfasst, die in die Patrone (1) eingreift.

7. Verstellvorrichtung nach einem der vorhergehenden Ansprüche, **dadurch gekennzeichnet, dass** die zweite Hülse (5) mit einem zu verstellenden Teil eines Fahrzeugsitzes verbindbar ist.

8. Fahrzeugsitz mit einer Verstellvorrichtung nach einem der vorhergehenden Ansprüche, wobei die zweite Hülse (5) mit einem zu verstellenden Sitzteil, insbesondere mit einer Lehne verbunden ist.

9. Verwendung einer Verstellvorrichtung nach einem der Ansprüche 1 bis 7 zur Verstellung eines Sitzteils eines Fahrzeugsitzes.

## Claims

1. An adjustment device, for a seat part of a vehicle seat, with
- a first sleeve (4) which is mounted axially non-displaceably and in rotation-resistant manner, which has at least one first twisted inner groove (6),
- a cartridge (1) which has a first twisted outer thread (9) which is engaged with the first twisted inner groove (6),
**characterised by**
a second sleeve (5) which has at least one second twisted inner groove (7) which is engaged with a second twisted outer thread (10) of the cartridge (1), the first twisted outer thread (9) and the second twisted outer thread (10) being formed axially offset and in opposite directions on the cartridge (1).

2. An adjustment device according to Claim 1, **characterised in that** the first sleeve (4) and the second sleeve (5) are arranged coaxially on the cartridge (1).

3. An adjustment device according to one of the preceding claims, **characterised in that** the second sleeve (5) is mounted axially non-displaceably and rotatably.

4. An adjustment device according to one of the preceding claims, **characterised in that** the cartridge (1) has an internal thread (2).

5. An adjustment device according to one of the preceding claims, **characterised by** an axially fixed drive which is arranged in order to displace the cartridge (1) axially.

6. An adjustment device according to one of the preceding claims, **characterised in that** the drive comprises a drive spindle (3) which engages in the cartridge (1).

7. An adjustment device according to one of the preceding claims, **characterised in that** the second sleeve (5) is able to be connected to a part, which is to be adjusted, of a vehicle seat.

8. A vehicle seat with an adjustment device according to one of the preceding claims, the second sleeve (5) being connected to a seat part which is to be adjusted, in particular to a rest.

9. Use of an adjustment device according to one of Claims 1 to 7 for adjusting a seat part of a vehicle seat.

## Revendications

1. Dispositif de réglage pour un élément de siège d'un siège de véhicule, avec
- un premier manchon (4) monté de manière non déplaçable axialement et immobile en rotation qui présente au moins un premier écrou intérieur de rotation (6),
- une cartouche (1) qui présente un premier filet extérieur de rotation (9) qui est en prise avec le premier écrou intérieur de rotation (6),
**caractérisé par**
un deuxième manchon (5) qui présente au moins un deuxième écrou intérieur de rotation (7) qui est en prise avec un deuxième filet extérieur de rotation (10) de la cartouche (1), le premier filet extérieur de rotation (9) et le deuxième filet extérieur de rotation (10) étant réalisés décalés axialement et s'étendant en sens opposé sur la cartouche (1).

2. Dispositif de réglage selon la revendication 1, **caractérisé par le fait que** le premier manchon (4) et le deuxième manchon (5) sont disposés co-axialement sur la cartouche (1).

3. Dispositif de réglage selon l'une des revendications précédentes, **caractérisé par le fait que** le deuxième manchon (5) est monté de manière non déplaçable axialement et rotative.

4. Dispositif de réglage selon l'une des revendications précédentes, **caractérisé par le fait que** la cartouche (1) présente un filet intérieur (2).

5. Dispositif de réglage selon l'une des revendications précédentes, **caractérisé par** un entraînement fixé axialement qui est disposé pour déplacer axialement la cartouche (1).

6. Dispositif de réglage selon l'une des revendications précédentes, **caractérisé par le fait que** l'entraînement comporte une broche d'entraînement (3) qui s'engage dans la cartouche (1).

7. Dispositif de réglage selon l'une des revendications précédentes, **caractérisé par le fait que** le deuxième manchon (5) peut être assemblé avec un élément à régler d'un siège de véhicule.

8. Siège de véhicule avec un dispositif de réglage selon l'une des revendications précédentes, dans lequel le deuxième manchon (5) est assemblé avec un élément de siège à régler, en particulier avec un appui.

9. Utilisation d'un dispositif de réglage selon l'une des revendications 1 à 7 pour régler un élément de siège d'un siège de véhicule.
